# FASCICULE DE BREVET EUROPEEN

(11) **EP 3 426 896 B1**
(45) Date de publication et mention de la délivrance du brevet: **25.12.2019**
(21) Numéro de dépôt: 17713358.4
(22) Date de dépôt: 09.03.2017
(51) Int. Cl.: F01D 5/18

(54) **AUBE REFROIDIE DE TURBINE**
GEKÜHLTE TURBINENSCHAUFEL
COOLED TURBINE BLADE

(30) Priorité: 10.03.2016 FR 1652014
(43) Date de publication de la demande: 16.01.2019
(73) Titulaire: Safran, 75015 Paris (FR)
(72) Inventeur: PAQUIN, Sylvain, 77550 Moissy-Cramayel (FR); ROLLINGER, Adrien, Bernard, Vincent, 77550 Moissy-Cramayel (FR)
(74) Mandataire: Brevalex
(86) Numéro de dépôt international: PCT/FR2017/050527
(87) Numéro de publication internationale: WO 2017/153687

(56) Documents cités:
- EP-A1- 2 189 230
- EP-A2- 1 630 354
- EP-A2- 1 659 264
- WO-A1-2015/181497

## Description

### DOMAINE TECHNIQUE

L'invention concerne une aube de moteur d'aéronef de type turbomachine, tel que par exemple un turboréacteur à double flux ou un turbopropulseur à double flux.

### ETAT DE LA TECHNIQUE ANTERIEURE

Dans un tel moteur 1, l'air extérieur est admis dans une manche d'entrée 2 pour traverser une soufflante 3 comportant une série de pales rotatives avant de se scinder en un flux primaire central et un flux secondaire entourant le flux primaire.

Le flux primaire est ensuite compressé en traversant un premier et un second étage de compression 4 et 6, avant d'arriver dans une chambre de combustion 7, après quoi il se détend en traversant un ensemble de turbines 8 avant d'être évacué vers l'arrière en générant de la poussée. Le flux secondaire est quant à lui propulsé directement vers l'arrière par la soufflante pour générer une poussée complémentaire.

La détente dans les turbines 8, qui permet d'entraîner le compresseur 4, 6 et la soufflante 3, a lieu à température élevée du fait qu'elle se produit immédiatement après la combustion. Cette turbine 8 est ainsi conçue et dimensionnée pour fonctionner dans des conditions sévères de température, de pression et de débit de fluide.

Chaque turbine comporte une succession d'étages comportant chacun une série d'aubes portées par l'arbre moteur, les aubes soumises aux conditions les plus sévères étant celles des premiers étages de détente, appelés étages haute pression.

D'une manière générale, les besoins accrus en performances et l'évolution des réglementations conduisent à concevoir des moteurs fonctionnant dans des environnements de plus en plus sévères, ce qui implique d'accroître la tenue en température des aubes haute pression.

Néanmoins, les améliorations des matériaux et revêtements de ces aubes ne suffisant pas pour supporter les températures élevées pouvant être atteintes, ceci conduit à reconsidérer le refroidissement de ces aubes.

Ce refroidissement est assuré en faisant circuler à l'intérieur de ces aubes de l'air frais prélevé en amont de la combustion et admis en pied d'aube, pour cheminer le long d'un circuit interne de l'aube. Cet air est évacué hors de l'aube par des perçages traversant sa paroi, qui permettent en outre de créer à la surface externe de l'aube un film d'air plus froid que l'air issu de la combustion, pour limiter la température de l'aube. Les documents EP2189230, EP1630354, WO2015/181497 et EP1659264 divulguent des exemples d'aubes rotatives refroidies.

Pour accroître le refroidissement, les régions intérieures de l'aube dans lesquelles circule l'air comportent des artifices, à savoir des reliefs internes qui perturbent l'écoulement fluide de l'air de refroidissement pour accroître le transfert thermique.

Ces architectures de refroidissement traditionnelles sont pénalisées par le fait que la longueur du circuit interne de l'aube donne lieu à un air trop fortement réchauffé lorsqu'il atteint la fin de ce circuit, de sorte que son efficacité est limitée dans les régions de fin de parcours.

Le but de l'invention est de proposer une structure d'aube permettant d'améliorer l'efficacité de son refroidissement.

### EXPOSÉ DE L'INVENTION

A cet effet, l'invention a pour objet une aube de turbine de turbomachine telle qu'un turbopropulseur ou un turboréacteur, cette aube comprenant un pied portant une pale qui s'étend selon une direction d'envergure en se terminant par un sommet, cette pale comprenant un bord d'attaque et un bord de fuite situé en aval du bord d'attaque par rapport au sens de circulation du fluide entourant la pale en service, cette pale comprenant une paroi d'intrados et une paroi d'extrados espacées latéralement l'une de l'autre et reliant chacune le bord d'attaque au bord de fuite, cette pale comprenant :
- une rampe amont de refroidissement du bord d'attaque ;
- un conduit amont d'alimentation pour collecter de l'air au niveau du pied et pour alimenter la rampe amont de manière calibrée ;
- une unique cavité d'extrados d'un seul tenant longeant la paroi d'extrados et alimentée en air depuis le pied d'aube, pour former un écran thermique en regard du conduit amont ;
- un circuit de type trombone comprenant une portion médiane longeant l'aval du conduit amont et s'étendant latéralement jusqu'à la paroi d'extrados, cette portion médiane étant alimentée par le conduit amont au niveau du sommet de pale.

Le conduit amont est ainsi efficacement isolé de la chaleur de l'extrados, de sorte que l'air de refroidissement n'a pas encore été trop échauffé lorsqu'il atteint la portion médiane du circuit trombone, pour fournir encore un refroidissement efficace. Avantageusement, la longueur de la cavité d'extrados est réduite pour correspondre à celle du conduit amont, ce qui favorise une circulation homogène de l'air dans cette cavité, pour lui conférer une efficacité thermique optimale.

L'invention concerne également une aube ainsi définie, comprenant une cavité supérieure au niveau du sommet de la pale et dans laquelle cette cavité supérieure est alimentée par le conduit amont.

L'invention concerne également une aube ainsi définie, comprenant une unique cavité d'intrados d'un seul tenant qui longe la paroi d'intrados pour former un autre écran thermique couvrant la portion médiane.

L'invention concerne également une aube ainsi définie, dans laquelle l'unique cavité d'intrados couvre le conduit amont en plus de couvrir la portion médiane du circuit formant trombone.

L'invention concerne également une aube ainsi définie, dans laquelle le circuit de type trombone comporte une portion aval, cette portion aval étant alimentée par la portion médiane au voisinage du pied d'aube, cette portion aval s'étendant latéralement de la paroi d'extrados à la paroi d'intrados, ainsi que des perçages traversant la paroi d'intrados vers la portion aval pour former un film d'air en face externe de la paroi d'intrados.

L'invention concerne également une aube ainsi définie, comprenant un même trou de dépoussiérage qui est commun pour le conduit amont, pour le circuit en trombone, et pour la cavité supérieure.

L'invention concerne également une aube ainsi définie, comprenant une rampe aval d'alimentation de fentes de refroidissement du bord de fuite de l'aube, ces fentes traversant la paroi d'intrados, et un conduit aval d'alimentation calibrée de cette rampe aval qui est distinct du circuit formant trombone, ce conduit aval étant alimenté en air depuis le pied d'aube.

L'invention concerne également une aube ainsi définie, comprenant une rampe aval d'alimentation de fentes de refroidissement du bord de fuite de l'aube, ces fentes traversant la paroi d'intrados, et un conduit aval d'alimentation calibrée de cette rampe aval qui correspond à une portion aval du circuit formant trombone.

L'invention concerne encore des moyens de moulage pour la fabrication d'une aube ainsi définie, comprenant des empreintes et un ensemble de noyaux destinés à la formation des conduits internes et rampes, et de cavités internes formant écran thermique.

L'invention concerne encore une turbine incluant une aube ainsi définie.

### BRÈVE DESCRIPTION DES DESSINS

La figure 1 est une vue schématique d'un turboréacteur à double flux représenté en coupe selon un plan longitudinal ;
La figure 2 est une vue en perspective d'une aube de turbine selon l'invention ;
La figure 3 est une vue en section de la pale de l'aube selon l'invention dans un plan normal à la direction d'envergure de l'aube ;
La figure 4 est une vue en coupe de la pale de l'aube selon l'invention selon une surface de coupe médiane par rapport à l'épaisseur de pale.

### EXPOSÉ DÉTAILLÉ DE MODES DE RÉALISATION PARTICULIERS

La base de l'invention est une aube comprenant un conduit principal d'alimentation en air qui est thermiquement isolé par une cavité d'extrados, et qui assure l'alimentation calibrée d'une rampe de refroidissement du bord d'attaque et d'un circuit de type trombone.

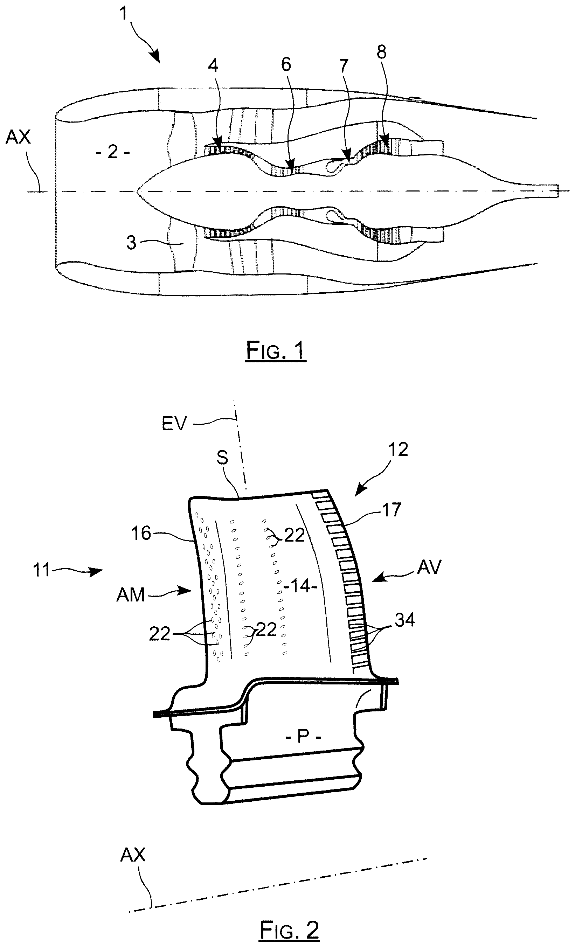

Cette aube qui apparaît dans la figure 2 en y étant repérée par 11 comporte un pied P portant une pale 12 s'étendant selon une direction d'envergure EV radiale par rapport à son axe de rotation AX. La pale 12 s'étend depuis une base ou plateforme par laquelle elle est raccordée au pied P jusqu'à un sommet S correspondant à son extrémité libre, et elle comporte une paroi d'extrados 13 ainsi qu'une paroi d'intrados 14.

Ces parois 13 et 14 se rejoignent au niveau du bord d'attaque 16 de la pale qui correspond à la région amont AM, et au niveau de son bord de fuite effilé 17 de la pale qui correspond à sa région aval AV. L'amont et l'aval s'entendent par rapport au sens de circulation du fluide entourant la pale en service, le bord de fuite étant en aval du bord d'attaque.

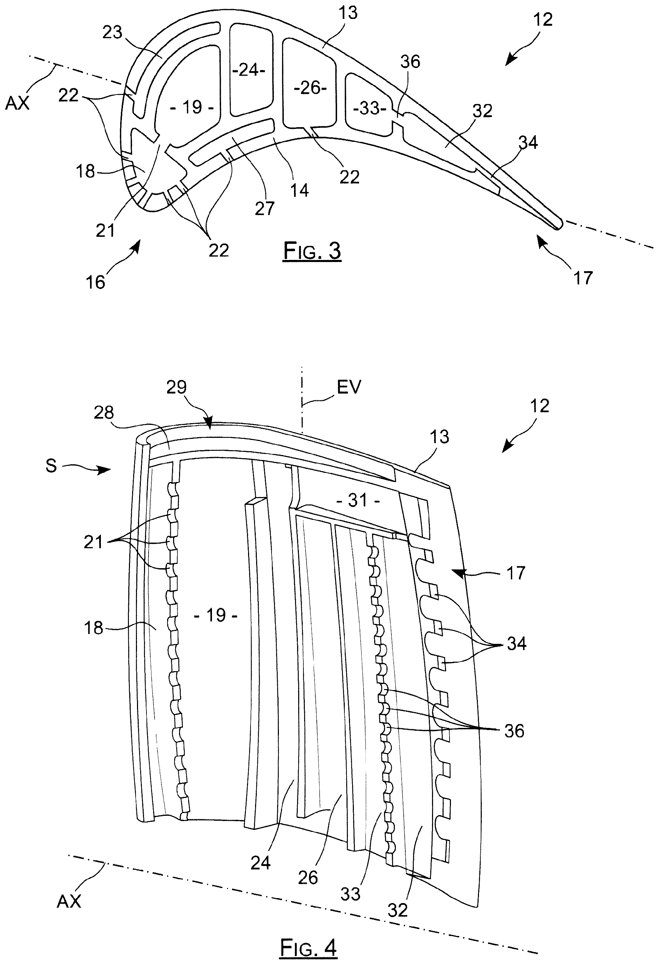

Comme visible sur les figures 3 et 4, cette aube comporte une rampe amont 18 de refroidissement de son bord d'attaque 16 en aval de laquelle s'étend un conduit amont 19 d'alimentation en air de refroidissement qui longe la rampe amont 18 en s'étendant lui aussi sur toute la hauteur de la pale le long de la direction d'envergure EV.

Le conduit amont 19 communique avec la rampe amont 18 par une série de trous calibrés 21 régulièrement espacés les uns des autres et orientés perpendiculairement à la direction d'envergure EV, pour alimenter cette rampe de façon calibrée, tout en assurant un refroidissement par impact du bord d'attaque 16.

Comme visible sur la figure 3, la pale 12 comporte des trous 22 formés dans son bord d'attaque pour évacuer l'air de refroidissement qui est acheminé dans la rampe amont 18 par le conduit amont 19, via les trous 22. D'autres trous 22 formés à travers la paroi d'intrados et la paroi d'extrados permettent d'évacuer l'air de refroidissement circulant dans d'autres parties de la pale.

Le conduit amont 19 assurant l'alimentation principale en air est séparé de la paroi d'extrados 13 par une unique cavité d'extrados 23 de faible épaisseur formant écran thermique pour couvrir uniquement le conduit amont 19 afin de le protéger de la chaleur reçue par l'extrados. Cette cavité d'extrados 23 qui est formée d'un seul tenant, et non pas d'un circuit de type trombone ou analogue, longe l'extrados en présentant une faible épaisseur. Elle est délimitée par un contour généralement rectangulaire et elle s'étend sur toute la hauteur de la pale et sur toute la longueur du conduit amont 19 le long de l'extrados ou de l'axe AX. Cette cavité d'extrados 23 est alimentée en air via le pied de l'aube de façon directe, c'est-à-dire indépendamment du conduit amont 19.

Cette aube comprend successivement, en aval du conduit amont 19, une portion de conduit médiane 24 longeant le conduit 19, et une portion de conduit aval 26 longeant la portion médiane 24 en aval de celle-ci. La portion médiane 24 est raccordée au conduit 19 au niveau du sommet de pale qui est repéré par S, et la portion aval 26 est raccordée à la portion médiane 24 au voisinage du pied de pale.

L'ensemble formé par le conduit amont 19 et les portions 24 et 26 forme ainsi un circuit de type trombone. L'air acheminé en haut de pale, c'est-à-dire à son sommet S, par le conduit amont 19 circule ensuite vers le pied de pale par la portion médiane 24, puis à nouveau vers le sommet de pale par la portion aval 26.

Complémentairement, une unique cavité d'intrados 27 longeant la paroi d'intrados 14 s'étend sur toute la hauteur de pale en couvrant uniquement l'ensemble formé par le conduit amont 19 et la portion médiane 24, pour constituer un écran thermique qui les isole thermiquement de la chaleur reçue par l'intrados.

Cette cavité d'intrados 27 qui délimite elle aussi un espace interne formé d'un seul tenant, présente une faible épaisseur et s'étend longitudinalement depuis le conduit amont 19 jusqu'à la portion aval 26. La cavité d'intrados 27 présente elle aussi un contour généralement rectangulaire et s'étend sur toute la hauteur de la pale selon la direction EV, et sur la longueur de l'ensemble formé par les conduits 19 et 24 le long de l'axe AX.

Selon la direction d'épaisseur de l'aube, ou direction latérale, qui est sensiblement normale à sa direction longitudinale AX, la portion médiane 24 s'étend de l'extrados jusqu'à la cavité d'intrados 27. La portion aval 26 s'étend quant à elle, selon l'épaisseur de l'aube, depuis la paroi d'extrados 13 jusqu'à la paroi d'intrados 14.

Ainsi, dans l'exemple des figures, la cavité d'extrados 23 isole thermiquement uniquement le conduit 19, alors que la cavité d'intrados 27 isole thermiquement le conduit amont 19 ainsi que la portion médiane 24.

Par ailleurs, la portion aval 26 du circuit en trombone dans laquelle l'air circule depuis le pied vers le sommet, comporte des trous traversant la paroi d'intrados 14 pour évacuer l'air circulant dans cette portion aval 26 en créant un film de refroidissement couvrant l'intrados dans cette région. Dans ces conditions, la perte d'efficacité thermique due à l'augmentation de section du circuit trombone dans sa portion aval 26 est ainsi compensée par la création d'un film de refroidissement à la face externe de la paroi d'intrados.

Comme visible sur la figure 4, la région du sommet de pale est délimitée par une paroi de fermeture 28 d'orientation sensiblement normale à la direction d'envergure EV. Cette paroi de fermeture délimite, conjointement avec les bords de la paroi d'extrados 13 et de la paroi d'intrados 14, une forme creuse appelée baignoire et repérée par 29, qui termine la pale au niveau de son sommet.

Complémentairement, la pale comporte une cavité supérieure, repérée par 31, encore appelée cavité sous baignoire, et qui sert à améliorer le refroidissement du sommet de pale dans la région de la baignoire.

Cette cavité supérieure 31, qui longe la paroi de fermeture 28 en s'étendant depuis le conduit amont 19 jusqu'au bord de fuite 17, est elle aussi alimentée par le conduit amont 19 en étant connectée à celui-ci au niveau du sommet de pale.

Le bord de fuite 17 de l'aube est refroidi par une rampe aval 32 délivrant de l'air dans une série de fentes 34 par lesquelles elle communique avec la face d'intrados. Cette rampe aval 32 est alimentée de façon calibrée par un conduit aval dédié 33 avec lequel elle communique par une série de trous calibrés 36 orientés perpendiculairement à la direction d'envergure EV et régulièrement espacés les uns des autres.

Le conduit aval 33 longe la portion aval 26 du circuit en trombone, et il est alimenté directement depuis le pied de l'aube, indépendamment du conduit amont 19. Ce conduit aval 33 est longé par la rampe aval 32 qu'il alimente en air par l'intermédiaire de différents trous calibrés 36.

Comme visible sur la figure 4, ce conduit aval 33 alimente la majorité des fentes 34 du bord de fuite. Seule la ou les fentes du sommet S étant alimentées par la cavité supérieure 31, de façon à bénéficier d'un air plus frais pour accroître leur efficacité thermique dans cette région.

Alternativement, et en particulier dans le cas d'une pale de plus faible longueur le long de l'axe AX, il peut au contraire être prévu que la rampe aval soit alimentée directement par la portion aval du circuit en trombone, de façon calibrée. Ceci permet alors de simplifier la conception générale de l'aube, et par suite sa fabrication.

Il est à noter que d'une manière générale, l'invention permet d'optimiser la conception de l'aube et son refroidissement en tirant parti de l'effet Coriolis. En particulier, la portion médiane 24 refroidit efficacement la portion correspondante d'extrados car l'air circule du sommet vers le pied dans cette portion médiane 24, de sorte qu'il est plaqué par l'effet Coriolis vers la face la plus proche de l'extrados lorsque la pale est en rotation autour de l'axe AX. De plus, l'air descendant dans la portion médiane 24 le long de l'extrados a été faiblement réchauffé du fait qu'il a été thermiquement protégé par la cavité d'extrados 23, le long de laquelle il a été acheminé.

Par ailleurs, il peut aussi être prévu que l'unique cavité d'intrados s'étende longitudinalement sur une longueur plus faible que dans l'exemple des figures, de manière à couvrir seulement la portion médiane 24, sans couvrir le conduit amont 19.

L'air du conduit amont 19 refroidit alors de façon efficace de la portion d'intrados correspondante, du fait qu'il circule du pied vers le sommet dans ce conduit amont, de sorte que l'effet Coriolis tend à plaquer l'air circulant vers la paroi d'intrados lorsque l'aube est en rotation.

Cette alternative permet ainsi d'alléger l'aube en tirant encore un meilleur parti de l'effet Coriolis.

D'une manière générale, l'invention permet de profiter de l'efficacité d'une cavité d'extrados et éventuellement d'une cavité d'intrados, formant écran thermique au voisinage du bord d'attaque, c'est-à-dire dans une région fortement contrainte du point de vue thermique. Dans la région en aval du voisinage du bord de fuite, plus faiblement contrainte du point de vue thermique, le refroidissement est assuré par le circuit en trombone.

L'alimentation en air frais, du circuit en trombone, de la cavité sous baignoire et de la rampe amont à partir d'un même conduit d'alimentation amont qui est isolé permet de simplifier la conception du pied d'aube en réduisant le nombre de conduits devant descendre dans ce pied pour s'y alimenter en air. Elle contribue aussi à limiter le nombre de trous de dépoussiérage puisqu'un même trou de dépoussiérage en sommet dessert à la fois la cavité sous baignoire, la rampe amont et le circuit en trombone.

## Revendications

1. Aube rotative de turbine de turbomachine telle qu'un turbopropulseur ou un turboréacteur, cette aube comprenant un pied portant une pale (12) qui s'étend selon une direction d'envergure (EV) en se terminant par un sommet (S), cette pale (12) comprenant un bord d'attaque (16) et un bord de fuite (17) situé en aval du bord d'attaque (16) par rapport au sens de circulation du fluide entourant la pale en service, cette pale (12) comprenant une paroi d'intrados (14) et une paroi d'extrados (13) espacées latéralement l'une de l'autre et reliant chacune le bord d'attaque (16) au bord de fuite (17), cette pale (12) comprenant :
- une rampe amont de refroidissement (18) du bord d'attaque (16) ;
- un conduit amont d'alimentation (19) pour collecter de l'air au niveau du pied et pour alimenter la rampe amont (18) de manière calibrée ;
- une unique cavité d'extrados (23) d'un seul tenant longeant la paroi d'extrados (13) et alimentée en air depuis le pied d'aube, pour former un écran thermique en regard du conduit amont (19) ;
- un circuit de type trombone comprenant une portion médiane(24) longeant l'aval du conduit amont (19) et s'étendant latéralement jusqu'à la paroi d'extrados (13),
l'aube étant **caractérisée en ce que** cette portion médiane (24) est alimentée par le conduit amont (19) au niveau du sommet (S) de pale.

2. Aube selon la revendication 1, comprenant une cavité supérieure (31) au niveau du sommet (S) de la pale (12) et dans laquelle cette cavité supérieure (31) est alimentée par le conduit amont (19).

3. Aube selon la revendication 1 ou 2, comprenant une unique cavité d'intrados (27) d'un seul tenant qui longe la paroi d'intrados pour former un autre écran thermique couvrant la portion médiane (24).

4. Aube selon la revendication 3, dans laquelle l'unique cavité d'intrados (27) couvre le conduit amont (19) en plus de couvrir la portion médiane (24) du circuit formant trombone.

5. Aube selon l'une des revendications 1 à 4, dans laquelle le circuit de type trombone comporte une portion aval (26), cette portion aval étant alimentée par la portion médiane (24) au voisinage du pied d'aube, cette portion aval (26) s'étendant latéralement de la paroi d'extrados (13) à la paroi d'intrados (14), ainsi que des perçages (22) traversant la paroi d'intrados vers la portion aval (26) pour former un film d'air en face externe de la paroi d'intrados.

6. Aube selon la revendication 2, comprenant un même trou de dépoussiérage qui est commun pour le conduit amont (19), pour le circuit en trombone, et pour la cavité supérieure (31).

7. Aube selon l'une des revendications 1 à 6, comprenant une rampe aval d'alimentation (32) de fentes (34) de refroidissement, ces fentes traversant la paroi d'intrados (14) au niveau du bord de fuite (17), et un conduit aval (33) d'alimentation calibrée de cette rampe aval (32) qui est distinct du circuit formant trombone, ce conduit aval (33) étant alimenté en air depuis le pied d'aube.

8. Aube selon l'une des revendications 1 à 6, comprenant une rampe aval d'alimentation (32) de fentes (34) de refroidissement, ces fentes traversant la paroi d'intrados (14) au niveau du bord de fuite (17), et un conduit aval (33) d'alimentation calibrée de cette rampe aval (32) qui correspond à une portion aval (26) du circuit formant trombone.

9. Moyens de moulage pour la fabrication d'une aube selon l'une des revendications 1 à 6, comprenant des empreintes et un ensemble de noyaux destinés à la formation des conduits internes et rampes, et de cavités internes formant écran thermique.

10. Turbomachine comprenant une turbine incluant une aube selon l'une des revendications 1 à 8.

## Patentansprüche

1. Turbinenrotationsschaufel einer Turbomaschine wie z.B. eines Turbotriebwerks oder eines Turbostrahltriebwerks, wobei die Schaufel einen Fuß mit einem Flügel (12) aufweist, der sich in einer Spannweitenrichtung (EV) erstreckt und an einem Scheitelpunkt (S) endet, wobei der Flügel (12) eine Vorderkante (16) und eine stromabwärts der Vorderkante (16) bezüglich der Zirkulationsrichtung des den Flügel im Betrieb umgebenden Mediums liegende Hinterkante (17) aufweist, wobei der Flügel (12) eine Innenwölbungswand (14) und eine Außenwölbungswand (13) aufweist, die seitlich voneinander beabstandet sind und jeweils die Vorderkante (16) mit der Hinterkante (17) verbinden, wobei der Flügel (12) Folgendes aufweist:
- eine vorgelagerte Kühlrampe (18) der Vorderkante (16);
- eine vorgelagerte Versorgungsleitung (19) zum Aufnehmen der Luft auf der Höhe des Fußes und zum kalibrierten Versorgen der vorgelagerten Rampe (18);
- einen einzigen Außenwölbungshohlraum (23) in einem Stück, der entlang der Außenwölbungswand (13) verläuft und ab dem Fuß der Schaufel mit Luft versorgt wird, um einen Hitzeschild gegenüber der vorgelagerten Leitung (19) zu bilden;
- einen posaunenartigen Kreislauf mit einem mittleren Abschnitt (24), der entlang der Strömungsrichtung der vorgelagerten Leitung (19) verläuft und sich seitlich bis zu der Außenwölbungswand (13) erstreckt,
wobei die Schaufel **dadurch gekennzeichnet ist, dass** der mittlere Abschnitt (24) durch die vorgelagerte Leitung (19) auf der Höhe des Scheitelpunktes (S) des Flügels versorgt wird.

2. Schaufel nach Anspruch 1, mit einem oberen Hohlraum (31) auf der Höhe des Scheitelpunktes (S) des Flügels (12), und in welcher der obere Hohlraum (31) durch die vorgelagerte Leitung (19) versorgt wird.

3. Schaufel nach Anspruch 1 oder 2, mit einem einzigen Innenwölbungshohlraum (27) in einem Stück, der entlang der Innenwölbungswand verläuft, um einen weiteren Hitzeschild zu bilden, welcher den mittleren Abschnitt (24) bedeckt.

4. Schaufel nach Anspruch 3, in welcher der einzige Innenwölbungshohlraum (27) die vorgelagerte Leitung (19) bedeckt und darüber hinaus den mittleren Abschnitt (24) des posaunenförmigen Kreislaufs bedeckt.

5. Schaufel nach einem der Ansprüche 1 bis 4, in welcher der posaunenartige Kreislauf einen vorderen Abschnitt (26) umfasst, wobei der vordere Abschnitt durch den mittleren Abschnitt (24) angrenzend an den Schaufelfuß versorgt wird, wobei sich der vordere Abschnitt (26) seitlich von der Außenwölbungswand (13) zu der Innenwölbungswand (14) derart erstreckt, dass Bohrungen (22) die Innenwölbungswand in Richtung des vorderen Abschnittes (26) durchqueren, um eine Luftschicht auf der Außenseite der Innenwölbungswand auszubilden.

6. Schaufel nach Anspruch 2, mit einem entsprechenden Entstaubungsloch, das der vorgelagerten Leitung (19), dem posaunenartigen Kreislauf und dem oberen Hohlraum (31) gemeinsam ist.

7. Schaufel nach einem der Ansprüche 1 bis 6, mit einer vorderen Versorgungsrampe (32) mit Kühlschlitzen (34), wobei die Schlitze die Innenwölbungswand (14) auf der Höhe der Hinterkante (17) durchqueren, und mit einer vorderen Versorgungsleitung (33), die von der vorderen Rampe (32) kalibriert ist, die von dem posaunenförmigen Kreislauf verschieden ist, wobei die vordere Leitung (33) von dem Flügelfuß ab mit Luft versorgt wird.

8. Schaufel nach einem der Ansprüche 1 bis 6, mit einer ansteigenden Versorgungsrampe (32) mit Kühlschlitzen (34), wobei die Schlitze die Innenwölbungswand (14) auf der Höhe der Hinterkante (17) durchqueren, und mit einer vorderen Leitung (33) zur kalibrierten Versorgung der vorderen Rampe (32), die einem vorderen Abschnitt (26) des posaunenförmigen Kreislaufs entspricht.

9. Formgussmittel zur Herstellung einer Schaufel nach einem der Ansprüche 1 bis 6, mit Vertiefungen und einer Menge an Formkernen, die zur Bildung von inneren Leitungen und Rampen vorgesehen sind, sowie mit Innenhohlräumen, die einen Hitzeschild bilden.

10. Turbomaschine mit einer Turbine, die eine Schaufel nach einem der Ansprüche 1 bis 8 aufweist.

## Claims

1. Rotary turbine blade of a turbomachine such as a turboprop or a turbojet, this blade comprising a root supporting an airfoil (12) extending along the length (EV) direction and terminating at a tip (S), this airfoil (12) comprising a leading edge (16) and a trailing edge (17) located downstream from the leading edge (16) following the direction of fluid circulation surrounding the airfoil in service, this airfoil (12) comprising an intrados wall (14) and an extrados wall (13) at a lateral spacing from each other and each connecting the leading edge (16) to the trailing edge (17), this airfoil (12) comprising:
- an upstream cooling manifold (18) for the leading edge (16);
- an upstream feed conduit (19) to collect air at the root and to provide a calibrated supply to the upstream manifold (18);
- a single extrados cavity (23) in a single piece along the extrados wall (13) and supplied with air from the blade root, to form a heat shield facing the upstream conduit (19);
- a trombone type circuit comprising a median portion (24) along the part downstream from the upstream conduit (19) and extending laterally as far as the extrados wall (13), this median portion (24) being supplied by the upstream conduit (19) at the tip (S) of the airfoil.

2. Blade according to claim 1, comprising an upper cavity (31) at the tip (S) of the airfoil (12) and in which this upper cavity (31) is fed by the upstream conduit (19).

3. Blade according to claim 1 or 2, comprising a single intrados cavity (27) in a single-piece that extends along the intrados wall to form another heat shield covering the median portion (24).

4. Blade according to claim 3, in which the single intrados cavity (27) covers the upstream conduit (19) in addition to covering the median portion (24) of the circuit forming a trombone.

5. Blade according to one of claims 1 to 4, in which the trombone type circuit comprises a downstream portion (26), this downstream portion being supplied by the median portion (24) close to the bottom of the blade, this downstream portion (26) extending laterally from the extrados wall (13) to the intrados wall (14), and drillings (22) passing through the intrados wall towards the downstream portion (26) to form an air film at the external face of the intrados wall.

6. Blade according to claim 2, comprising a single dust removal hole common for the upstream conduit (19), the trombone conduit, and for the upper cavity (31).

7. Blade according to one of claims 1 to 6, comprising a downstream feed manifold (32) for cooling slits (34), these slits passing through the intrados wall (14) at the trailing edge (17), and a calibrated downstream feed conduit (33) for this downstream manifold (32) that is distinct from the circuit forming a trombone, this downstream conduit (33) being supplied with air from the blade root.

8. Blade according to one of claims 1 to 6, comprising a downstream feed manifold (32) for cooling slits (34), these slits passing through the intrados wall (14) at the trailing edge (17), and a calibrated downstream feed conduit (33) for this downstream manifold (32) that corresponds to a downstream portion (26) of the trombone shaped circuit.

9. Casting means for manufacturing a blade according to one of claims 1 to 6, comprising cavities and a set of cores designed to form internal conduits and manifolds, and internal cavities forming a heat shield.

10. Turbomachine comprising a blade according to one of claims 1 to 8.
